# EUROPEAN PATENT APPLICATION

(11) **EP 4 184 700 A1**
(43) Date of publication of application: **24.05.2023**
(21) Application number: 20945926.2
(22) Date of filing: 21.07.2020
(51) Int. Cl.: H01M 50/457, H01M 10/0525

(54) **BATTERY AND ELECTRONIC DEVICE**

(71) Applicant: Ningde Amperex Technology Ltd., Ningde, Fujian 350900 (CN)
(72) Inventor: HE, Jun, Ningde, Fujian 350900 (CN); ZHENG, Qiang, Ningde, Fujian 350900 (CN); FANG, Zhanzhao, Ningde, Fujian 350900 (CN)
(74) Representative: Klunker IP Patentanwälte PartG mbB
(86) International application number: PCT/CN2020/103296
(87) International publication number: WO 2022/016378

(57) **Abstract**

A battery is disclosed, including an electrode assembly and an electrolyte, where the electrode assembly includes an anode plate, a cathode plate, and a separator located between the anode plate and the cathode plate. The electrolyte includes a lithium salt and an organic solvent, the organic solvent includes a linear carboxylate compound, and a mass percentage of the linear carboxylate compound in the organic solvent is 10%-70%. The separator includes a substrate, a first coating layer, and a second coating layer, where the substrate includes a first surface and a second surface, the first surface and the second surface being back to back with each other, and the first coating layer and the second coating layer are disposed on the first surface and the second surface respectively. The first coating layer faces toward the anode plate and the second coating layer faces toward the cathode plate, the first coating layer includes a first binder and the second coating layer includes a second binder, and a median particle size of the second binder is greater than a median particle size of the first binder. The battery of this application can have both high low-temperature cycling performance and high high-temperature cycling and storage performance. This application further provides an electronic apparatus having the foregoing battery.

## Description

### TECHNICAL FIELD

This application relates to the battery field, and in particular, to a battery and an electronic apparatus with such battery.

### BACKGROUND

Lithium-ion batteries have been widely used in the field of consumer electronics by virtue of their advantages such as high specific energy, high operating voltage, low selfdischarge rate, small size, and low weight. With rapid development of electric vehicles and mobile electronic devices, people impose increasingly high requirements for performance (for example, cycling performance) of batteries.

In the prior art, low-temperature cycling performance and high-temperature cycling performance of lithium-ion batteries generally cannot be both considered. For example, for a battery that can be used at low temperature, an electrolyte solvent generally needs to be optimized (for example, by adding a large amount of low-viscosity solvent) to decrease viscosity and improve conductivity of the electrolyte at low temperature, thereby improving low-temperature performance of the lithium-ion battery. However, the foregoing electrolyte system may degrade high-temperature storage performance and high-temperature cycling performance of the battery. For another example, a separator with high adhesion is generally used to guarantee adhesion of interface between the separator and electrode plates, and inhibit side reaction of gas production of the battery, thereby improving high-temperature cycling and storage performance of the battery. However, the separator with high adhesion in turn does not help improve the low-temperature cycling performance of the battery. Consequently, requirements for lithium-ion batteries in actual application still cannot be satisfied.

### SUMMARY

To resolve the foregoing disadvantages in the prior art, it is necessary to provide a battery having both high low-temperature cycling performance and high high-temperature cycling and storage performance.

An embodiment of this application provides a battery, including an electrode assembly and an electrolyte, where the electrode assembly includes an anode plate, a cathode plate, and a separator located between the anode plate and the cathode plate. The electrolyte includes a lithium salt and an organic solvent, the organic solvent includes a linear carboxylate compound, and a mass percentage of the linear carboxylate compound in the organic solvent is 10%-70%. The separator includes a substrate, a first coating layer, and a second coating layer, where the substrate includes a first surface and a second surface, the first surface and the second surface being back to back with each other, the first coating layer and the second coating layer are disposed on the first surface and the second surface respectively, the first coating layer faces toward the anode plate and the second coating layer faces toward the cathode plate, the first coating layer includes a first binder and the second coating layer includes a second binder, and a median particle size of the second binder is greater than a median particle size of the first binder.

In some embodiments of this application, the linear carboxylate compound is selected from one or more of compounds shown in the following formula I: 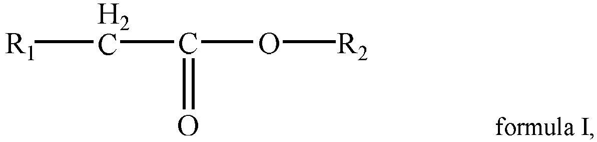 where
R₁ is selected from a hydrogen atom, a halogen atom, a hydroxyl group, a substituted or unsubstituted alkyl group having 1 to 20 carbon atoms, a substituted or unsubstituted alkoxy group having 1 to 20 carbon atoms, a substituted or unsubstituted alkenyl group having 1 to 20 carbon atoms, a substituted or unsubstituted aryl group having 6 to 30 carbon atoms, or a substituted or unsubstituted aryloxy group having 6 to 30 carbon atoms, and R₂ is selected from a hydrogen atom, a halogen atom, a substituted or unsubstituted alkyl group having 1 to 20 carbon atoms, a substituted or unsubstituted alkenyl group having 1 to 20 carbon atoms, or a substituted or unsubstituted aryl group having 6 to 30 carbon atoms.

In some embodiments of this application, the median particle size of the first binder is 0.3 µm ≤ D50 ≤ 3 µm, and the median particle size of the second binder is 4 µm ≤ D50 ≤ 15 µm.

In some embodiments of this application, a weight per unit area of the first coating layer is 0.5 mg/5000 mm²-5 mg/5000 mm², and a weight per unit area of the second coating layer is 2.0 mg/5000 mm²-10 mg/5000 mm².

In some embodiments of this application, a thickness of the first coating layer is 0.2 µm-4 µm, and a thickness of the second coating layer is 5 µm-20 µm.

In some embodiments of this application, at least one of the first binder and the second binder is a core-shell structure, and the first binder and the second binder are each independently selected from at least one of homopolymers or copolymers of vinylidene fluoride, hexafluoropropene, ethylene, propylene, vinyl chloride, allyl chloride, acrylic acid, acrylate, styrene, tetravinylidene fluoride, butadiene, and acrylonitrile.

In some embodiments of this application, the first coating layer further includes a thickener, a mass of the first binder accounts for 88%-99.5% of a total mass of the first coating layer, and a mass of the thickener accounts for 0.5%-12% of the total mass of the first coating layer.

In some embodiments of this application, the first coating layer further includes a wetting agent, the mass of the first binder accounts for 88%-92.5% of the total mass of the first coating layer, the mass of the thickener accounts for 0.5%-2% of the total mass of the first coating layer, and a mass of the wetting agent accounts for 7%-10% of the total mass of the first coating layer.

In some embodiments of this application, the second coating layer further includes a third binder, a mass percentage of the second binder in the second coating layer is 85%-95%, and a mass percentage of the third binder in the second coating layer is 5%-15%.

In some embodiments of this application, the separator further includes a ceramic layer, the ceramic layer is disposed on at least one of the first surface and the second surface of the substrate, and the ceramic layer is disposed between the substrate and the first coating layer and/or the second coating layer.

An embodiment of this application further provides an electronic apparatus, and the electronic apparatus includes any one of the foregoing batteries.

The battery of this application uses a double-sided heterogeneous separator (that is, particles of the binders of the first coating layer and the second coating layer on the two sides of the substrate of the separator have different median particle sizes) and a high-percentage linear carboxylate electrolyte, so that the double-sided heterogeneous separator works with the high-percentage linear carboxylate electrolyte to jointly make the battery have both high low-temperature cycling performance and high high-temperature cycling and storage performance.

### BRIEF DESCRIPTION OF DRAWINGS

FIG. 1 is a schematic structural diagram of a battery according to an embodiment of this application.
FIG. 2 is a schematic diagram of an internal structure of the battery shown in FIG. 1.
FIG. 3 is a schematic structural diagram of a separator according to an embodiment of this application.
FIG. 4 is a schematic structural diagram of a separator according to another embodiment of this application.
FIG. 5 is a schematic structural diagram of a separator according to still another embodiment of this application.
FIG. 6 is a schematic structural diagram of a separator according to yet another embodiment of this application.
FIG. 7 is a schematic structural diagram of an electronic apparatus according to an embodiment of this application.

### Reference signs of main components:

| | |
|---|---|
| electrode assembly | 10 |
| anode plate | 11 |
| cathode plate | 12 |
| separator | 13 |
| electrolyte | 20 |
| battery | 100 |
| electronic apparatus | 200 |
| substrate | 130 |
| first coating layer | 131 |
| second coating layer | 132 |
| ceramic layer | 133 |
| first surface | 1301 |
| second surface | 1302 |
| first binder | 1311 |
| second binder | 1321 |
| third binder | 1322 |

This application will be further described with reference to the accompanying drawings in the following specific embodiments.

### DESCRIPTION OF EMBODIMENTS

To more clearly understand the foregoing objectives, features, and advantages in this application, the following describes in detail this application with reference to the accompanying drawings and specific embodiments. It should be noted that, in absence of conflicts, the embodiments and features in the embodiments in this application may be mutually combined. The following illustrates many specific details for full understanding of this application, and the described embodiments are only some rather than all of the embodiments of this application. Unless otherwise defined, all technical and scientific terms used herein shall have the same meanings as commonly understood by persons skilled in the art to which this application belongs. The terms used herein in the specification of this application are merely intended to describe specific embodiments but not intended to limit this application. The term "and/or" used herein includes any and all combinations of one or more related listed items.

In the embodiments of this application, for description instead of limitation on this application, the term "connection" used in the specification and claims of this application is not limited to physical or mechanical connection, whether directly or indirectly. "Upper", "lower", "above", "below", "left", "right", and the like are merely used to indicate relative location relationship. The relative location relationship varies with an absolute location of the described object correspondingly.

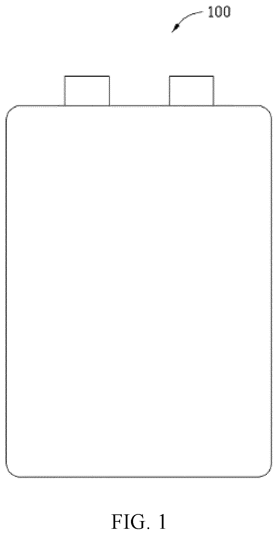

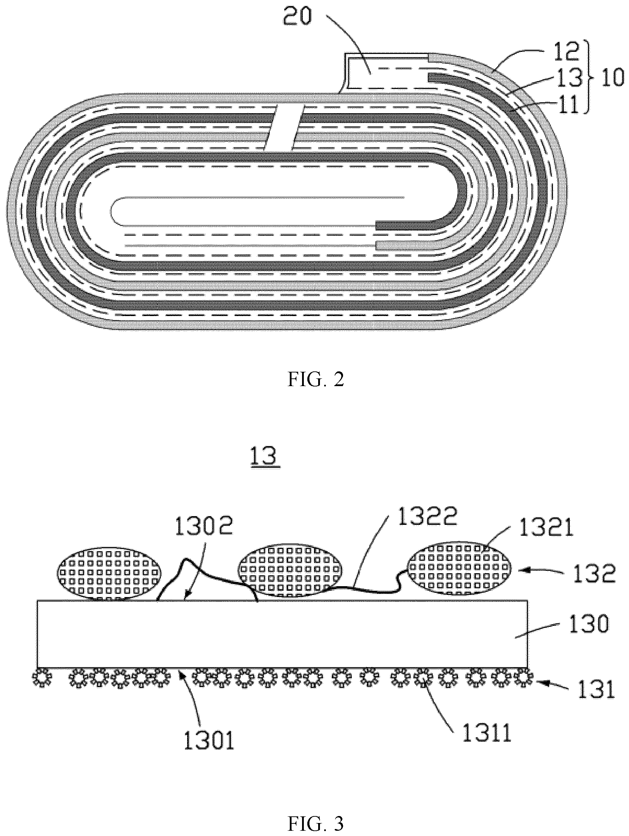

Refer to FIG. 1 and FIG. 2. An embodiment of this application provides a battery 100, including an electrode assembly 10 and an electrolyte 20, where the electrode assembly 10 includes an anode plate 11, a cathode plate 12, and a separator 13 located between the anode plate 11 and the cathode plate 12.

The electrolyte 20 includes a lithium salt and an organic solvent, the organic solvent includes a linear carboxylate compound, and a mass percentage of the linear carboxylate compound in the organic solvent is 10%-70%. In some embodiments, the mass percentage of the linear carboxylate compound in the organic solvent is 20%-60%.

Refer to FIG. 3 together. The separator 13 includes a substrate 130, a first coating layer 131, and a second coating layer 132. The substrate 130 includes a first surface 1301 and a second surface 1302, the first surface 1301 and the second surface 1302 being back to back with each other, and the first coating layer 131 and the second coating layer 132 are disposed on the first surface 1301 and the second surface 1302 respectively. The first coating layer 131 faces toward the anode plate 11 and the second coating layer 132 faces toward the cathode plate 12, the first coating layer 131 includes a first binder 1311 and the second coating layer 132 includes a second binder 1321, and a median particle size of the second binder 1321 is greater than a median particle size of the first binder 1311.

The battery 100 of this application uses a double-sided heterogeneous separator (that is, particles of the binders of the first coating layer 131 and the second coating layer 132 on the two sides of the substrate 130 of the separator 13 have different median particle sizes) and a high-percentage linear carboxylate electrolyte. Because the first binder 1311 with a smaller median particle size is used for the first coating layer 131 of the separator 13, the first coating layer 131 has higher adhesion and can be used as a high-adhesion coating layer to improve adhesion of interfaces between the separator 13 and the electrode plates and inhibit gas production on interfaces between linear carboxylate and the electrode plate, thereby improving high-temperature cycling performance and storage performance of the battery 100. In addition, the second coating layer 132 of the separator 13 is a large-particle polymer coating layer, and a gap may be reserved between the separator 13 and the electrode plates after winding, to form a transport channel for the electrolyte 20 on a side of the second coating layer 132, which facilitates infiltration of the electrolyte 20 during electrolyte injection and improves transport of the electrolyte 20 at low temperature, thereby alleviating lithium precipitation of the electrode plate. This can ensure high high-temperature cycling performance and storage performance of the battery 100 while effectively improving low-temperature cycling performance of the battery 100. In addition, featuring low adhesion, high conductivity, and the like, linear carboxylate can also alleviate the problems of poor infiltration and low transport speed of the electrolyte 20 on the side of the first coating layer 131 that are easily caused by high adhesion of the first coating layer 131 of the separator 13. This further improves the low-temperature cycling performance of the battery 100.

Therefore, in this application, the double-sided heterogeneous separator works with the high-percentage linear carboxylate electrolyte to jointly make the battery 100 have both high low-temperature cycling performance and high high-temperature cycling and storage performance.

In an embodiment, the linear carboxylate compound is selected from one or more of compounds shown in the following formula I: 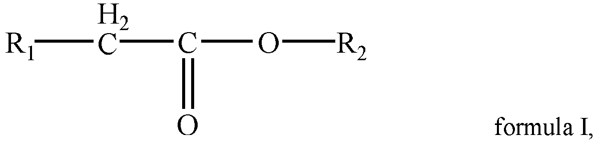 where
R₁ is selected from a hydrogen atom, a halogen atom, a hydroxyl group, a substituted or unsubstituted alkyl group having 1 to 20 carbon atoms, a substituted or unsubstituted alkoxy group having 1 to 20 carbon atoms, a substituted or unsubstituted alkenyl group having 1 to 20 carbon atoms, a substituted or unsubstituted aryl group having 6 to 30 carbon atoms, or a substituted or unsubstituted aryloxy group having 6 to 30 carbon atoms, and R₂ is selected from a hydrogen atom, a halogen atom, a substituted or unsubstituted alkyl group having 1 to 20 carbon atoms, a substituted or unsubstituted alkenyl group having 1 to 20 carbon atoms, or a substituted or unsubstituted aryl group having 6 to 30 carbon atoms.

In an embodiment, the linear carboxylate compound is selected from at least one of methyl formate, methyl acetate, ethyl formate, ethyl acetate, propyl acetate, ethyl propionate, methyl propionate, n-propyl propionate, isopropyl propionate, n-butyl propionate, isobutyl propionate, n-amyl propionate, isoamyl propionate, ethyl butyrate, n-propyl butyrate, propyl isobutyrate, n-amyl butyrate, n-amyl isobutyrate, n-butyl butyrate, isobutyl isobutyrate, and n-amyl valerate.

Optionally, the linear carboxylate compound is selected from at least one of methyl formate, ethyl acetate, propyl acetate, methyl propionate, ethyl propionate, propyl propionate, and ethyl butyrate.

In an embodiment, the median particle size of the first binder 1311 is 0.3 µm ≤ D50 ≤ 3 µm. If the median particle size of the first binder 1311 is excessively small, micropores of the separator 13 are likely to be blocked during hot pressing of the electrode plates and the separator 13, to block channels for ions and further decrease kinetic performance of the battery 100. This can further decrease cycling performance of the battery 100, especially the low-temperature cycling performance. The first binder 1311 with excessively large median particle size may affect adhesion, and the first coating layer 131 cannot effectively inhibit the gas production on the interface, thereby limiting improvement of the high-temperature cycling performance and storage performance of the battery 100. In some embodiments, the median particle size of the first binder 1311 is 0.6 µm ≤ D50 ≤ 0.8 µm.

In an embodiment, a particle size of the second binder 1321 is 4 µm ≤ D50 ≤ 15 µm. The second binder 1321 with excessively small median particle size cannot provide gap, which does not help improve the low-temperature cycling performance of the battery 100. However, an excessively large median particle size also causes a serious decrease in adhesion. In some embodiments, the particle size of the second binder 1321 is 4 µm ≤ D50 ≤ 10 µm.

The term "D50" is a particle size where the cumulative distribution by volume reaches 50% as counted from the small particle size side. Physically, it means particles with a larger particle size than the particle account for 50% of total particles in volume, and particles with a smaller particle size than the particle also account for 50% of the total particles in volume.

In an embodiment, a weight per unit area of the first coating layer 131 is 0.5 mg/5000 mm²-5 mg/5000 mm². If the weight per unit area of the first coating layer 131 is excessively small, adhesion is poor, and it is difficult to improve adhesion of the interfaces between the separator 13 and the electrode plates and inhibit gas production on the interface, thereby limiting improvement of the high-temperature cycling performance and storage performance of the battery 100. If the weight per unit area of the first coating layer 131 is excessively large, channels for lithium ions are likely to be blocked, thereby causing a decrease in kinetic performance of the battery 100 and also affecting cycling performance of the battery 100. In some embodiments, the weight per unit area of the first coating layer 131 is 1.5 mg/5000 mm²-2.5 mg/5000 mm².

In an embodiment, a weight per unit area of the second coating layer 132 is 2.0 mg/5000 mm²-10 mg/5000 mm². If the weight per unit area of the second coating layer 132 is excessively small, a gap cannot be provided, which is not conducive to improving the low-temperature cycling performance of the battery 100. However, an excessively large weight per unit area affects energy density of the battery 100. In some embodiments, the weight per unit area of the second coating layer 132 is 4 mg/5000 mm²-8 mg/5000 mm².

In an embodiment, a thickness of the first coating layer 131 is 0.2 µm-4 µm, and a thickness of the second coating layer 132 is 5 µm-20 µm. The first coating layer 131 in this application is relatively thin, helping increase the energy density of the battery 100.

In an embodiment, the first binder 1311 is a core-shell structure or a non-core-shell structure. A main component of the core of the core-shell structure is a polymer. The polymer may be a homopolymer formed by polymerizing one type of polymerizable monomers or a copolymer formed by polymerizing two or more than two types of polymerizable monomers, and the polymerizable monomer may be selected from an acrylate monomer, an aromatic monovinyl compound, or monocarboxylic or dicarboxylic anhydride. In some embodiments, the core of the core-shell structure is selected from at least one of homopolymers or copolymers of ethyl acrylate, butyl acrylate, ethyl methacrylate, styrene, chlorostyrene, fluorostyrene, methylstyrene acrylic acid, methacrylic acid and maleic acid, and these homopolymers or copolymers may be used alone, or two or more than two of them may be used in combination.

The core of the core-shell structure may alternatively be a homopolymer of one type of polymerizable monomers or a copolymer of two or more than two types of polymerizable monomers, and the polymerizable monomer may be selected from acrylate, an aromatic monovinyl compound, or a cyanated vinyl compound. In some embodiments, the core of the core-shell structure is selected from at least one of homopolymers or copolymers of methyl acrylate, ethyl acrylate, butyl acrylate, methyl methacrylate, ethyl methacrylate, butyl methacrylate, ethylene, chlorostyrene, fluorostyrene, methylstyrene, acrylonitrile, and methacrylonitrile. These homopolymers or copolymers may be used alone, or two or more than two of them may be used in combination.

Amain component of the non-core-shell structure is a polymer. The polymer may be a homopolymer formed by polymerizing one type of polymerizable monomers or a copolymer formed by polymerizing two or more than two types of polymerizable monomers, and the polymerizable monomer may be selected from acrylate, an aromatic monovinyl compound, or a cyanated vinyl compound. In some embodiments, the non-core-shell structure may be selected from at least one of homopolymers or copolymers of acrylic acid, acrylate, butadiene, styrene, acrylonitrile, ethylene, chlorostyrene, fluorostyrene, and propylene. These homopolymers or copolymers may be used alone, or two or more than two of them may be used in combination.

In an embodiment, the second binder 1321 is a core-shell structure or a non-core-shell structure, and the second binder 1321 is selected from at least one of homopolymers or copolymers of vinylidene fluoride, hexafluoropropene, ethylene, propylene, vinyl chloride, allyl chloride, acrylic acid, acrylate, styrene, tetravinylidene fluoride, butadiene, and acrylonitrile. These homopolymers or copolymers may be used alone, or two or more than two of them may be used in combination.

In an embodiment, the first coating layer 131 further includes a thickener. The thickener is used to improve stability of a slurry and prevent sedimentation of the slurry. A mass of the first binder 1311 accounts for 88%-99.5% of a total mass of the first coating layer 131. A mass of the thickener accounts for 0.5%-12% of the total mass of the first coating layer 131. The thickener is not limited in type in this application, for example, may be sodium carboxymethyl cellulose.

Further, the first coating layer 131 further includes a wetting agent. The wetting agent is used to reduce surface energy of the slurry and prevent missing coating. The mass of the first binder 1311 accounts for 88%-92.5% of the total mass of the first coating layer 131, the mass of the thickener accounts for 0.5%-2% of the total mass of the first coating layer 131, and a mass of the wetting agent accounts for 7%-10% of the total mass of the first coating layer 131. In an embodiment, the wetting agent may be selected from at least one of dimethylsiloxane, polyethylene oxide, oxyethylene alkyl phenol ether, polyoxyethylene fatty alcohol ether, polyoxyethylene polyoxypropylene block copolymer, and dioctyl sodium sulfosuccinate.

In an embodiment, the second coating layer 132 further includes a third binder 1322. The third binder 1322 is used to assist in bonding the second binder 1321 to the substrate 130. A mass percentage of the second binder 1321 in the second coating layer 132 is 85%-95%, and a mass percentage of the third binder in the second coating layer 132 is 5%-15%. If the percentage of the third binder 1322 is excessively low, adhesion performance is significantly decreased. However, if the percentage is excessively high, rate performance of the battery 100 is deteriorated. In some embodiments, the third binder 1322 is selected from at least one of homopolymers or copolymers of ethyl acrylate, butyl acrylate, ethyl methacrylate, styrene, chlorostyrene, fluorostyrene, methylstyrene, acrylic acid, methacrylic acid, maleic acid, acrylonitrile, and butadiene.

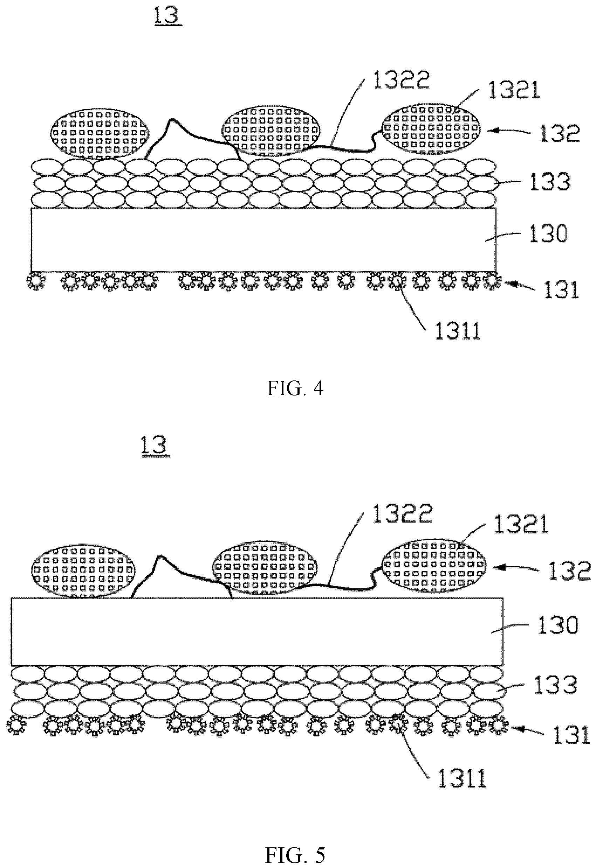

Refer to FIG. 4 to FIG. 6 together. In an embodiment, the separator 13 further includes a ceramic layer 133, the ceramic layer 133 is disposed on at least one of the first surface 1301 and the second surface 1302 of the substrate 130, and the ceramic layer 133 is disposed between the substrate 130 and the first coating layer 131 and/or the second coating layer 132. The ceramic layer 133 is used to improve heat resistance and puncture resistance of the separator 13. A type of ceramics in the ceramic layer 133 may be one or more mixtures of aluminum oxide, boehmite, titanium dioxide, silicon dioxide, zirconium dioxide, tin dioxide, magnesium hydroxide, magnesium oxide, zinc oxide, barium sulfate, boron nitride, aluminum nitride, and the like.

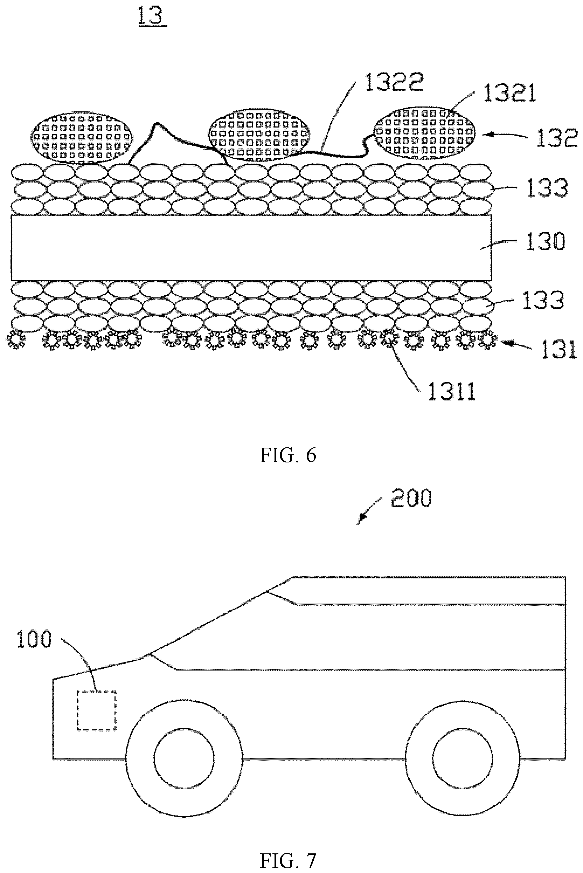

As shown in FIG. 4, there is one ceramic layer 133, located between the second coating layer 132 and the substrate 130. As shown in FIG. 5, there is one ceramic layer 133, located between the first coating layer 131 and the substrate 130. As shown in FIG. 6, there may be two ceramic layers 133. One ceramic layer 133 is located between the first coating layer 131 and the substrate 130, and the other ceramic layer 133 is located between the second coating layer 132 and the substrate 130.

In some embodiments, a thickness of the ceramic layer 133 is 0.5 µm-6 µm.

In some embodiments, the substrate 130 may be selected from one or a combination of a polyethylene (PE) film, a polypropylene (PP) film, and a polyethylene terephthalate (PET) film. The substrate 130 may be a single-layer structure formed by a film of one type of material, or a multi-layer composite structure formed by films of one or more types of materials. A thickness of the substrate 130 may be 3 µm-20 µm, which is not limited herein in this application.

The battery 100 of this application may include a lithium-ion secondary battery, a lithium polymer battery, a nickel-metal hydride battery, a nickel-cadumium battery, a lead storage battery, and the like. The battery 100 being a lithium-ion battery is used as an example for description.

The lithium-ion battery 100 provided by this application uses the separator 13, and other components include the cathode plate 12, the anode plate 11, the electrolyte 20, and the like. For example, a cathode active material (selected from lithium cobalt oxide, lithium manganate oxide, llithium nickel cobalt manganate, lithium nickel manganate, and the like), a binder, a conductive agent, a solvent, and the like may be made into a slurry and then applied onto Al foil, followed by drying and cold pressing, to prepare the cathode plate 12 of the battery 100. An anode active material (selected from graphite, silicon, silicon carbon, and the like), a binder, a dispersant, a conductive agent (selected from conductive carbon black, lamellar graphite, carbon nanotubes (CNT), graphene, and the like), and the like are made into a slurry and then applied onto Cu foil, followed by drying and cold pressing, to prepare the anode plate 11 of the battery 100. The electrolyte 20 includes an organic solvent and a lithium salt. The lithium salt may include at least one of lithium hexafluorophosphate (LiPF₆), lithium tetrafluoroborate (LiBF₄), lithium difluorophosphate (LiPO₂F₂), lithium bis(fluorosulfonyl)imide LiN(CF₃SO₂)₂(LiTFSI), lithium bis(fluorosulfonyl)imide Li(N(SO₂F)₂)(LiFSI), lithium bis(oxalate)borate LiB(C₂O₄)₂(LiBOB), or lithium difluoro(oxalato)borate LiBF₂(C₂O₄)(LiDFOB). In addition to the linear carboxylate compound, the organic solvent may further include one or more of the following compounds: ethylene carbonate (EC), propylene carbonate (PC), dimethyl carbonate (DMC), diethyl carbonate (DEC), ethyl methyl carbonate (EMC), γ-butyrolactone (BL), and tetrahydrofuran (THF). One or more of the foregoing compounds specifically listed are selected as the organic solvent and used in combination with the linear carboxylate compound, so that electrochemical performance of the lithium ion battery 100, such as rate performance, cycling performance, and capacity retention rate after storage, can be further improved after the electrolyte 20 is applied to the lithium ion battery 100.

Refer to FIG. 7. An embodiment of this application further provides an electronic apparatus 200. The electronic apparatus 200 includes the battery 100. The electronic apparatus 200 may be a consumer electronic product (such as a mobile communications apparatus, a tablet computer, a notebook computer, and the like), an electric tool, an unmanned aerial vehicle, an energy storage apparatus, a power apparatus, or the like. In an embodiment, the electronic apparatus 200 is an electric vehicle.

Specific examples and comparative examples below are used to describe this application. The ceramic layer may be disposed between the first coating layer and the substrate or between the second coating layer and the substrate, or the ceramic layer may be disposed between the first coating layer and the substrate and between the second coating layer and the substrate. These solutions can also achieve the objectives of this application. Persons skilled in the art should understand that these solutions shall also fall within the protection scope of this application.

### Example 1

Preparation of cathode plate: A cathode active material lithium cobalt oxide (LiCoO₂), conductive carbon black (Super P), and polyvinylidene fluoride (PVDF) were mixed at a mass ratio of 97.5:1.0:1.5, N-methylpyrrolidone (NMP) was added as a solvent to prepare a slurry with a solid percentage of 75%, and the slurry was stirred to uniformity. The slurry was evenly applied onto a surface of a cathode current collector aluminum foil, followed by drying, cold pressing, and cutting, to obtain a cathode plate.

Preparation of anode plate: An anode active material graphite (Graphite), conductive carbon black (Super P), and styrene-butadiene rubber (SBR) were mixed at a mass ratio of 96:1.5:2.5, deionized water (H₂O) was added as a solvent to prepare a slurry with a solid content of 70%, and the slurry was stirred to uniformity. The slurry was evenly applied onto a surface of an anode current collector copper foil, followed by drying, cold pressing, and cutting, to obtain an anode plate.

Preparation of double-sided heterogeneous separator: (1) APE film was used as a substrate, with a thickness of 9 µm.

(2) Preparation of ceramic layer: A ceramic layer glue solution (composition includes alumina ceramics, butadiene-styrene polymer, and deionized water at a mass ratio of 35:10:55) was prepared first, specifically, total 30 kg of butadiene-styrene polymer and deionized water was first added into a double planetary stirrer with a volume of 60 L and dispersed at 45°C for three hours; then, 16.1 kg of alumina ceramic was added to the stirrer and dispersed at high speed at 45°C for two hours; and then ball milling was performed for 1.5 hours by using a nano-grinder, a grinding medium being spherical zirconia beads with a diameter of 6 µm, to obtain a heat-resistant coating glue solution. Then, the ceramic layer glue solution was applied onto one surface of the substrate by transfer coating at a coating speed of 6 m/min and a coating thickness of 3 µm, and three-stage drying was performed in an oven, a length of 3 m at each stage and a temperature of 50°C, 60°C, and 60°C being respectively set for the oven, so as to obtain a ceramic layer, where a weight per unit area of the ceramic layer was 0.23 mg/cm².

(3) Preparation of first coating layer: A first binder polyacrylic acid (D50 = 0.7 µm) was added to the stirrer, then a thickener sodium carboxymethyl cellulose was added, and the mixture was stirred and mixed to uniformity; a wetting agent dimethylsiloxane was added, and then deionized water was added and stirred to adjust viscosity, to obtain a first coating layer slurry, where mass percentages of the first binder, the thickener, and the wetting agent were 91wt%, 0.5wt%, and 8.5wt% respectively; and the first coating layer slurry was evenly applied onto the ceramic layer, and three-stage drying was performed in an oven, a length of 3 m at each stage and a temperature of 50°C, 60°C, and 60°C being respectively set for the oven, so as to obtain a first coating layer, where a weight per unit area of the first coating layer was 0.9 mg/5000 mm².

(4) Preparation of second coating layer: A second binder PVDF (D50 = 7 µm) was added to the stirrer; a third binder acrylonitrile was added, and the mixture was stirred and mixed to uniformity; deionized water was added and stirred to adjust viscosity, to obtain a second coating layer slurry, where mass percentages of the second binder and the third binder were 90wt% and 10wt% respectively; and the second coating layer slurry was evenly applied onto the other surface of the substrate with no ceramic layer provided, and then three-stage drying was performed in an oven, a length of 3 m at each stage and a temperature of 50°C, 60°C, and 60°C being respectively set for the oven, so as obtain a second coating layer, where a weight per unit area of the second coating layer was 2.5 mg/5000 mm² (for ease of description, hereinafter referred to as double-sided heterogeneous separator 1).

Preparation of electrolyte: In an argon atmosphere glove box with a water amount of less than 10 ppm, an organic solvent ethylene carbonate (EC), polycarbonate (PC), diethyl carbonate (DEC), and ethyl propionate (EP) were mixed at a mass ratio of EC:PC:DEC:EP = 15:15:60:10, and then a fully dried lithium salt lithium hexafluorophosphate (LiPF₆) was added to the organic solvent for dissolution and mixed to uniformity, to obtain an electrolyte.

Preparation of full battery: The cathode plate, the separator, and the anode plate were stacked in order, the first coating layer of the separator being opposite the anode plate and the second coating layer being opposite the cathode plate, and are wound to obtain an electrode assembly. The electrode assembly was placed in an outer package, the prepared electrolyte was injected, and packaging was performed, followed by processes such as formation, degassing, and trimming, to obtain a full battery.

### Example 2

Preparation of electrolyte: Ethylene carbonate (EC), polycarbonate (PC), diethyl carbonate (DEC), and ethyl propionate (EP) were mixed at a mass ratio of EC:PC:DEC:EP = 15:15:50:20, and other steps were the same as in Example 1.

### Example 3

Preparation of electrolyte: Ethylene carbonate (EC), polycarbonate (PC), diethyl carbonate (DEC), and ethyl propionate (EP) were mixed at a mass ratio of EC:PC:DEC:EP = 15:15:40:30, and other steps were the same as in Example 1.

### Example 4

Preparation of electrolyte: Ethylene carbonate (EC), polycarbonate (PC), diethyl carbonate (DEC), and ethyl propionate (EP) were mixed at a mass ratio of EC:PC:DEC:EP = 15:15:30:40, and other steps were the same as in Example 1.

### Example 5

Preparation of electrolyte: Ethylene carbonate (EC), polycarbonate (PC), diethyl carbonate (DEC), and ethyl propionate (EP) were mixed at a mass ratio of EC:PC:DEC:EP = 15:15:20:50, and other steps were the same as in Example 1.

### Example 6

Preparation of electrolyte: Ethylene carbonate (EC), polycarbonate (PC), diethyl carbonate (DEC), and ethyl propionate (EP) were mixed at a mass ratio of EC:PC:DEC:EP = 15:15: 10:60, and other steps were the same as in Example 1.

### Example 7

Preparation of electrolyte: Diethyl carbonate (DEC) was not added, ethylene carbonate (EC), polycarbonate (PC), and ethyl propionate (EP) were mixed at a mass ratio of EC:PC:EP = 15:15:70, and other steps were the same as in Example 1.

### Example 8

Preparation of double-sided heterogeneous separator: After the same substrate as in Example 4 was used, and a ceramic layer, a first coating layer slurry, and a second coating layer slurry were prepared by using the same methods as in Example 4, the second coating layer slurry was applied onto a surface of the ceramic layer, and the first coating layer slurry was applied onto the other surface of the substrate with no ceramic layer provided (for ease of description, hereinafter referred to as double-sided heterogeneous separator 2). Other steps were the same as in Example 4.

### Comparative Example 1

Preparation of electrolyte: Carbonate was not added, and an organic solvent ethylene carbonate (EC), polycarbonate (PC), and diethyl carbonate (DEC) were mixed at a mass ratio of EC:PC:DEC = 15:15:70.

Preparation of low-adhesion separator: (1) The same substrate as in Example 1 was used.

(2) A ceramic layer was prepared by using the same method as in Example 1.

(3) Preparation of low-adhesion coating layer: A binder PVDF (D50 = 7 µm) was added to the stirrer and stirred to uniformity; an auxiliary binder acrylonitrile was added, the mixture was stirred and mixed to uniformity, and finally deionized water was added to adjust viscosity, where mass percentages of the binder PVDF and the auxiliary binder were 90wt% and 10wt% respectively; and the slurry was evenly applied onto the ceramic coating layer and a surface of the PE substrate with no ceramic coating layer provided, and then three-stage drying was performed in an oven, a length of 3 m at each stage and a temperature of 50°C, 60°C, and 60°C being respectively set for the oven, so as to obtain a low-adhesion coating layer, where a weight per unit area of each low-adhesion coating layer was 1.5 mg/5000 mm². Other steps were the same as in Example 1.

### Comparative Example 2

Preparation of high-adhesion separator: (1) The same substrate as in Example 1 was used.

(2) A ceramic layer was prepared by using the same method as in Example 1.

(3) Preparation of high-adhesion coating layer: A binder polyacrylic acid (D50 = 0.7 µm) was added to the stirrer and stirred to uniformity; a thickener sodium carboxymethyl cellulose was added, and the mixture was stirred and mixed to uniformity; a wetting agent dimethylsiloxane was added; then deionized water was added to adjust viscosity, where mass percentages of the binder polyacrylic acid, the thickener, and the wetting agent were 91wt%, 0.5wt%, and 8.5wt% respectively; and the slurry was evenly applied onto the ceramic coating layer and a surface of the PE substrate with no ceramic coating layer provided, and three-stage drying was performed in an oven, a length of 3 m at each stage and a temperature of 50°C, 60°C, and 60°C being respectively set for the oven, so as to obtain a high-adhesion coating layer, where a weight per unit area of each high-adhesion coating layer was 0.9 mg/5000 mm². Other steps were the same as in Comparative Example 1.

### Comparative Example 3

Preparation of electrolyte: Ethylene carbonate (EC), polycarbonate (PC), diethyl carbonate (DEC), and ethyl propionate (EP) were mixed at a mass ratio of EC:PC:DEC:EP = 15:15:64:6, and other steps were the same as in Example 1.

### Comparative Example 4

Preparation of electrolyte: Diethyl carbonate (DEC) was not added, ethylene carbonate (EC), polycarbonate (PC), and ethyl propionate (EP) were mixed at a mass ratio of EC:PC:EP = 13:13:74, and other steps were the same as in Example 1.

### Comparative Example 5

Preparation of separator: The steps were the same as in Example 1, and other steps were the same as in Comparative Example 1.

### Comparative Example 6

Preparation of separator: The steps were the same as in Comparative Example 1, and other steps were the same as in Example 4.

### Comparative Example 7

Preparation of separator: The steps were the same as in Comparative Example 2, and other steps were the same as in Example 4.

Separator adhesion test, and low-temperature cycling capacity retention rate, high-temperature cycling capacity retention rate, and high-temperature storage performance tests were performed on the batteries prepared in the examples and comparative examples, and the test results were recorded in Table 1.

Steps of the separator adhesion test include: dry pressure adhesion between the separator and the anode and cathode plates was tested according to a 180° peel test standard, the separators and the anode and cathode plates were cut into samples of 54.2 mm × 72.5 mm, the first coating layer in the separator being compounded with the anode, hot pressing was performed using a hot pressing machine at 85°C and 1 MPa for 85 seconds, the compounded samples were cut into strips of 15 mm^{∗}54.2 mm, and adhesion of the separator to the anode was tested according to the 180° peel test standard. Similarly, the second coating layer in the separator was compounded with the cathode, hot pressing was performed using the hot pressing machine at 85°C and 1 MPa for 85 seconds, the compounded samples were cut into strips of 15 mm^{∗}54.2 mm, and adhesion of the separator to the cathode was tested according to the 180° peel test standard.

Steps of the low-temperature cycling capacity retention rate test include: at a temperature of 12°C, the battery was left standing for 30 minutes, then charged to 4.45 V at a constant current of 0.7C, charged to 0.05C at a constant voltage of 4.35 V, left standing for 5 minutes, and discharged to 3.0 V at a constant current of 0.5C, which was one charge and discharge cycle. A discharge capacity in this case was the first-cycle discharge capacity of the battery. After that, 500 charge and discharge cycles were performed, and the capacity retention rate of the battery after 500 cycles was calculated according to the following formula: capacity retention rate after 500 cycles (%) = (discharge capacity of the 500th cycle/first-cycle discharge capacity) × 100%.

Steps of the high-temperature cycling capacity retention rate test include: at a temperature of 45°C, the battery was left standing for 30 minutes, then charged to 4.45 V at a constant current of 0.7C, charged to 0.05C at a constant voltage of 4.35 V, left standing for 5 minutes, and discharged to 3.0 V at a constant current of 0.5C, which was one charge and discharge cycle. A discharge capacity in this case was the first-cycle discharge capacity of the battery. After that, 500 charge and discharge cycles were performed, and the capacity retention rate of the battery after 500 cycles was calculated by using the same method.

Steps of the high-temperature storage performance test include: the formed battery was charged to 4.45 V at a constant current of 0.7C at room temperature and then charged to 0.05C at a constant voltage of 4.35 V, and a thickness of the battery was measured and denoted as H₀. Then the battery was put into an 80°C thermostat and kept for eight hours, and a thickness of the battery was measured and denoted as H₁. Thickness swelling rate of battery stored at high temperature for 8 h (%) = (H₁-H₀)/H₀ × 100%.

**Table 1**

| | Electrolyte | | | | Type of separator | Adhesion of separator to anode (N/m) | Adhesion of separator to cathode (N/m) | Capacity retention rate after 500 cls at 12°C (%) | Capacity retention rate after 500 cls at 45°C (%) | Swelling rate at 80°C after 8h (%) |
|---|---|---|---|---|---|---|---|---|---|---|
| | EC (%) | PC (%) | DEC (%) | EP (%) | | | | | | |
| Example 1 | 15 | 15 | 60 | 10 | Double-sided heterogeneous separator 2 | 12 | 1 | 82.2 | 85.1 | 12.4 |
| Example 2 | 15 | 15 | 50 | 20 | Double-sided heterogeneous separator 2 | 12 | 1 | 83.4 | 84.7 | 12.7 |
| Example 3 | 15 | 15 | 40 | 30 | Double-sided heterogeneous separator 2 | 12 | 1 | 84.2 | 84.2 | 13.0 |
| Example 4 | 15 | 15 | 30 | 40 | Double-sided heterogeneous separator 2 | 12 | 1 | 85.5 | 83.8 | 13.3 |
| Example 5 | 15 | 15 | 20 | 50 | Double-sided heterogeneous separator 2 | 12 | 1 | 86.8 | 83.2 | 13.7 |
| Example 6 | 15 | 15 | 10 | 60 | Double-sided heterogeneous separator 2 | 12 | 1 | 88.2 | 82.7 | 13.9 |
| Example 7 | 15 | 15 | 0 | 70 | Double-sided heterogeneous separator 2 | 12 | 1 | 89.5 | 82.3 | 14.1 |
| Example 8 | 15 | 15 | 30 | 40 | Double-sided heterogeneous separator 1 | 1 | 6 | 86.5 | 85.4 | 12.8 |
| Comparative Example 1 | 15 | 15 | 70 | 0 | Conventional low-adhesion separator | 1 | 1 | 82.1 | 82.3 | 13.6 |
| Comparative Example 2 | 15 | 15 | 70 | 0 | Conventional high-adhesion separator | 12 | 6 | 53.2 | 87.8 | 11.6 |
| Comparative Example 3 | 15 | 15 | 64 | 6 | Double-sided heterogeneous separator 2 | 12 | 1 | 75.1 | 85.4 | 12.3 |
| Comparative Example 4 | 13 | 13 | 0 | 74 | Double-sided heterogeneous separator 2 | 12 | 1 | 89.7 | 78.5 | 17.4 |
| Comparative Example 5 | 15 | 15 | 70 | 0 | Double-sided heterogeneous separator 2 | 12 | 1 | 68.3 | 85.6 | 12.2 |
| Comparative Example 6 | 15 | 15 | 30 | 40 | Conventional low-adhesion separator | 1 | 1 | 86.9 | 72.8 | 34.2 |
| Comparative Example 7 | 15 | 15 | 30 | 40 | Conventional high-adhesion separator | 12 | 6 | 74.6 | 85.5 | 12.3 |

It can be learned from data in Table 1 that the battery of Comparative Example 1 is prepared by using a carboxylate-free electrolyte and a conventional low-adhesion separator. As compared with Comparative Example 1, the battery of Comparative Example 2 is prepared by using a carboxylate-free electrolyte and a conventional high-adhesion separator, which can improve the high-temperature storage and high-temperature cycling performance. However, because the electrolyte contains no carboxylate, the kinetic performance and low-temperature cycling performance are poor. Comparative Example 5 uses a carboxylate-free electrolyte and a double-sided heterogeneous separator. As compared with the low-adhesion separator being used in Comparative Example 1, the adhesion of the interfaces between the separator and the electrode plates in Comparative Example 5 is improved, thereby having higher high-temperature cycling and storage performance. As compared with the conventional high-adhesion separator of Comparative Example 2, a large-particle binder is used in Comparative Example 5, thereby having a higher low-temperature cycling performance. However, because the electrolyte of Comparative Example 5 contains no carboxylate, the low-temperature cycling performance in Comparative Example 5 is lower than that in Comparative Example 1, and the high-temperature cycling and storage performance in Comparative Example 5 is lower than that in Comparative Example 2.

Examples 1 to 7 use both the high-percentage carboxylate electrolyte and the double-sided heterogeneous separator. As compared with Comparative Example 5 in which only the double-sided heterogeneous separator but no high-percentage carboxylate electrolyte is used, in Examples 1 to 7, the low-temperature cycling performance can be improved while the high-temperature cycling and storage performance is ensured, and the low-temperature cycling performance of the battery is improved more significantly as an increasing percentage of carboxylate. Example 8 uses another double-sided heterogeneous separator of a different structure, and the battery also has high low-temperature cycling and high-temperature cycling and storage performance, indicating that the double-sided heterogeneous separator of a different structure has positive effects on the low-temperature cycling and high-temperature cycling and storage performance of the battery. As compared with the high-percentage carboxylate electrolyte and the conventional low-adhesion separator being used in Comparative Example 6, the double-sided heterogeneous separator introduced into Example 4 can enhance the interfaces between the separator and the electrode plates and reduce the side reactions, thereby improving the high-temperature cycling and storage performance of the battery while ensuring the low-temperature cycling performance. As compared with the high-percentage carboxylate electrolyte and the conventional high-adhesion separator being used in Comparative Example 7, the separator in Example 4 has a large-particle binder, which can improve infiltration and transport of the electrolyte at low temperature, thereby having a higher low-temperature cycling performance.

Meanwhile, as compared with Examples 1 to 7, the percentage of carboxylate in the electrolyte in Comparative Example 3 is less than 10%, leading to insufficient the kinetics degrading the low-temperature cycling performance; and the percentage of carboxylate in the electrolyte of Comparative Example 4 is higher than 70%, causing intensification of the side reactions of the electrolyte at high temperature and greatly degrading the high temperature cycling and storage performance of the battery.

The foregoing embodiments are merely intended to describe the technical solutions of this application, but not intended to constitute any limitation. Although this application is described in detail with reference to the foregoing preferred embodiments, persons of ordinary skill in the art should understand that modifications or equivalent replacements can be made to the technical solutions of this application, without departing from the spirit and scope of the technical solutions of this application.

## Claims

1. A battery, comprising an electrode assembly and an electrolyte, wherein the electrode assembly comprises an anode plate, a cathode plate, and a separator located between the anode plate and the cathode plate;
the electrolyte comprises a lithium salt and an organic solvent, the organic solvent comprises a linear carboxylate compound, and a mass percentage of the linear carboxylate compound in the organic solvent is 10%-70%; and
the separator comprises a substrate, a first coating layer, and a second coating layer, wherein the substrate comprises a first surface and a second surface, the first surface and the second surface being back to back with each other, the first coating layer and the second coating layer are disposed on the first surface and the second surface respectively, the first coating layer faces toward the anode plate and the second coating layer faces toward the cathode plate, the first coating layer comprises a first binder and the second coating layer comprises a second binder, and a median particle size of the second binder is greater than a median particle size of the first binder.

2. The battery according to claim 1, wherein the linear carboxylate compound is selected from one or more of compounds shown in the following formula I: 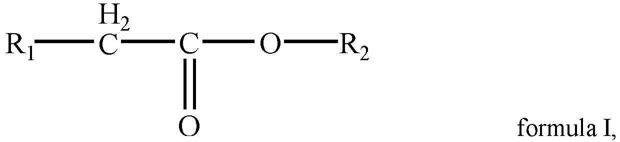 wherein
R₁ is selected from a hydrogen atom, a halogen atom, a hydroxyl group, a substituted or unsubstituted alkyl group having 1 to 20 carbon atoms, a substituted or unsubstituted alkoxy group having 1 to 20 carbon atoms, a substituted or unsubstituted alkenyl group having 1 to 20 carbon atoms, a substituted or unsubstituted aryl group having 6 to 30 carbon atoms, or a substituted or unsubstituted aryloxy group having 6 to 30 carbon atoms, and R₂ is selected from a hydrogen atom, a halogen atom, a substituted or unsubstituted alkyl group having 1 to 20 carbon atoms, a substituted or unsubstituted alkenyl group having 1 to 20 carbon atoms, or a substituted or unsubstituted aryl group having 6 to 30 carbon atoms.

3. The battery according to claim 1, wherein the median particle size of the first binder is 0.3 µm ≤ D50 ≤ 3 µm, and the median particle size of the second binder is 4 µm ≤ D50 ≤ 15 µm.

4. The battery according to claim 1, wherein a weight per unit area of the first coating layer is 0.5 mg/5000 mm²-5 mg/5000 mm², and a weight per unit area of the second coating layer is 2.0 mg/5000 mm²-10 mg/5000 mm².

5. The battery according to claim 1, wherein a thickness of the first coating layer is 0.2 µm-4 µm, and a thickness of the second coating layer is 5 µm-20 µm.

6. The battery according to claim 1, wherein at least one of the first binder and the second binder is a core-shell structure, and the first binder and the second binder are each independently selected from at least one of homopolymers or copolymers of vinylidene fluoride, hexafluoropropene, ethylene, propylene, vinyl chloride, allyl chloride, acrylic acid, acrylate, styrene, tetravinylidene fluoride, butadiene, and acrylonitrile.

7. The battery according to claim 1, wherein the first coating layer further comprises a thickener, a mass of the first binder accounts for 88%-99.5% of a total mass of the first coating layer, and a mass of the thickener accounts for 0.5%-12% of the total mass of the first coating layer.

8. The battery according to claim 7, wherein the first coating layer further comprises a wetting agent, the mass of the first binder accounts for 88%-92.5% of the total mass of the first coating layer, the mass of the thickener accounts for 0.5%-2% of the total mass of the first coating layer, and a mass of the wetting agent accounts for 7%-10% of the total mass of the first coating layer.

9. The battery according to claim 1, wherein the second coating layer further comprises a third binder, a mass percentage of the second binder in the second coating layer is 85%-95%, and a mass percentage of the third binder in the second coating layer is 5%-15%.

10. The battery according to claim 1, wherein the separator further comprises a ceramic layer, the ceramic layer is disposed on at least one of the first surface and the second surface of the substrate, and the ceramic layer is disposed between the substrate and the first coating layer and/or the second coating layer.

11. An electronic apparatus, comprising the battery according to any one of claims 1 to 10.
